# EUROPÄISCHE PATENTSCHRIFT

(11) **EP 1 493 295 B1**
(45) Veröffentlichungstag und Bekanntmachung des Hinweises auf die Patenterteilung: **10.08.2005**
(21) Anmeldenummer: 03722246.0
(22) Anmeldetag: 01.04.2003
(51) Int. Cl.: H04Q 7/38

(54) **VERFAHREN ZUR BERTRAGUNG VON DATEN, INSBESONDERE MIT MULTIM EDIALEN INHALTEN, IN EINEM MOBILFUNKNETZ**
METHOD FOR TRANSMITTING DATA, PARTICULARLY HAVING MULTIMEDIA CONTENTS, IN A MOBILE RADIO TELEPHONE NETWORK
PROCEDE POUR TRANSMETTRE DES DONNEES, NOTAMMENT DES CONTENUS MULTIMEDIA, DANS UN RESEAU RADIOTELEPHONIQUE

(30) Priorität: 09.04.2002 DE 10215567
(43) Veröffentlichungstag der Anmeldung: 05.01.2005
(73) Patentinhaber: SIEMENS AKTIENGESELLSCHAFT, 80333 München (DE)
(72) Erfinder: PRENZEL, Ralf, 38259 Salzgitter (DE); SCHMIDT, Andreas, 38114 Braunschweig (DE); TRAUBERG, Markus, 38159 Velchede (DE)
(86) Internationale Anmeldenummer: PCT/DE2003/001064
(87) Internationale Veröffentlichungsnummer: WO 2003/085999

(56) Entgegenhaltungen:
- WO-A-01/28171
- WO-A-01/35622
- WO-A-99/66746

## Beschreibung

Die vorliegende Erfindung betrifft ein Verfahren zum Übertragen von Daten, insbesondere mit multimedialen Inhalten, von einer ersten Kommunikationseinheit an eine zweite Kommunikationseinheit in einem Mobilfunknetz, wobei der ersten Kommunikationseinheit mindestens eine den Daten zugeordnete übertragungszustand-Nachricht übermittelt wird.

Bisherige Mobilfunknetze, wie etwa ein nach dem GSM-Standard (GSM: Global System für Mobile Communication) arbeitendes Netz, eröffnen nur eingeschränkte Möglichkeiten zur Übertragung von Textdaten. So können beispielsweise mittels dem SMS (Short Message Service) etwa nur bis zu 160 Zeichen umfassende Textnachrichten übertragen werden. Für die Kosten des Versands derartiger Textnachrichten hat der Datenversender aufzukommen.

Zukünftig soll auch eine Übertragung von Multimediadaten, insbesondere Bildern oder Filmen mit oder ohne Ton, möglich sein. Als Nachfolger der im Wesentlichen Sprache-/Textbasierten Telekommunikationssysteme, wie beispielsweise gemäß dem GSM-Standard, gelten multimediafähige Mobilfunksysteme, wie zum Beispiel gemäß dem UMTS-Standard (UMTS - Universal Mobile Telecommunications System). Beispielsweise im UMTS-oder GPRS-Standard ist vorgesehen, zusätzlich zum bisherigen SMS einen sogenannten MMS (Multimedia Messaging Service = Multimedianachrichtendienst) für die Übertragung von Nachrichten, die multimediale Inhalte umfassen können, auch als "Multimedia Messages" (MMs = Multimedialnachrichten) bezeichnet, vorzusehen. Damit können auch formatierte Texte, Bilder, Videos und Filme mit und ohne Ton übertragen werden. Die im SMS vorhandene Beschränkung auf eine Nachrichtenlänge von 160 Zeichen entfällt.

Nach dem Stand der Technik kann der MMS beispielsweise über das WAP (Wireless Application Protocol) implementiert werden. Zur Überbrückung der Luftschnittstelle zwischen einem MMStauglichen Endgerät, z.B. einem entsprechenden Mobiltelefon, und dem "WAP-Gateway" auf der Netzwerkseite kann nach [2] die Benutzung des WAP-WSP (WSP: Wireless Session Protocol) [6] verwendet werden.

Zur internen Verwaltung solcher MMS-über-WAP-Sendungen dienen sog. Header-Felder, also der eigentlichen Mulitimedia Nachricht (MM: Mulitmedia Message) vorangestellte Felder, in denen Informationen beispielsweise über die Herkunft, Sendezeit, Dateigröße und weitere Details enthalten sein können.

Wird ein MMS über das WAP in einem Mobilfunknetz implementiert, so wird innerhalb des Netzes mindestens eine MMS-Verbindungseinheit bzw. MM-Vermittlungsanordung vorgesehen, welche die Handhabung der MMs in diesem Mobilfunknetz übernimmt. Dazu gehört beispielsweise die Vermittlung der MMs zwischen dem Sender und dem Empfänger und die Zwischenspeicherung der MMs.

Dabei sendet zunächst der Sender eine Nachricht (MM) an die MMS-Verbindungseinheit, wobei der Sender, bzw. die MMS-Verbindungseinheit, der Nachricht einen Gültigkeitszeitraum verleihen können, nach dessen Ablauf die entsprechende MM nicht mehr durch den Empfänger von der MMS-Verbindungseinheit heruntergeladen werden kann. Der Empfänger erhält die Information über den Gültigkeitszeitraumes bis zum Ablauf der MM mit der MMS-Empfängerbenachrichtigung, die von der MMS-Verbindungseinheit an den Empfänger bzw. die empfangende MMS-Nutzerapplikation gesendet wird.

In WO 01/28171 A werden die Inhalte einer MHS-Nachvicht an eine empfangende Kommunitiationseinheit nicht übertragen, wenn diese besetzt oder nicht erreichbar ist.

Es sind in den MMS-Spezifikation [2, 5] mehrere Stati bekannt, die den Übertragungszustand einer Multimedianachricht (Multimedia Message: MM) beschreiben. Verschiedene Stati können beispielsweise anzeigen, ob eine MM erfolgreich übertragen wurde (Status: empfangen ="Retrieved"), ob die MM vom Empfänger abgelehnt wurde (Status: abgelehnt ="Rejected"), ob der Empfänger die Benachrichtigung über den Eingang der MM in dessen Postfach erhalten hat und diese später herunterladen kann (Status: verzögert ="Deferred"), ob der Empfänger die MM erkennen konnte (Status: nicht-erkannt ="Unrecognised") und ob der Empfänger die MM nicht innerhalb eines vorgebbaren Gültigkeitszeitraumes heruntergeladen und damit vollständig empfangen hat (Status: abgelaufen ="Expired").

Diese Stati können von der Vermittlungsanordnung an die erste Telekommunikationseinrichtung als Reaktion auf eine angefragte Übertragungszustand-Nachricht verschickt werden. Diese Nachrichten können entwerder nach einer quittierten Empfängerbenachrichtigungs-Mitteilung oder nach der erfolgreichen Auslieferung einer MM oder nach Ablauf der Gültigkeitsdauer der MM versandt werden.

Erhält der Sender einer MM die angefordete MMS-Übertragungszustand-Nachricht zu einer von Ihm versandten Nachricht, kann dieser beispielsweise im Falle des enthaltenen Status "abgelaufen" nicht entscheiden, ob der Empfänger die geschickte MM absichtlich nicht von der MMS-Verbindungseinheit heruntergeladen hat, oder ob der Empfänger innerhalb des Gültigkeitszeitraumes der MM nur nicht erreichbar war und daher die MM nicht zugestellt werden konnte. Der Sender hat somit keine Entscheidungshilfe, ob er die entsprechende MM mit einer erhöhten Gültigkeitdauer eventuell nochmal senden sollte, damit diese MM den Empfänger erreichen kann.

Es ist daher Aufgabe der vorliegenden Erfindung, dem Sender bzw. Versender von Daten, insbesondere einer Multimedia-Nachricht (MM), eine detailliertere Information über die Zustellbarkeit seiner versendeten Daten bereitzustellen.

Diese Aufgabe wird hinsichtlich eines Verfahrens gemäß Anspruch 1 und hinsichtlich einer Vermittlungsanordnung gemäß Anspruch 12 gelöst.

Bei einem Verfahren zur Übertragung von Daten, insbesondere mit multimedialen Inhalten, von einer ersten Kommunikationseinheit an eine zweite Kommunikationseinheit in einem Telekommunikationsnetz, wird der ersten Kommunikationseinheit, beispielsweise nach dem Abschicken einer Datensendung, mindestens eine den Daten zugeordnete Übertragungszustand-Nachricht übermittelt. Ferner wird im Falle einer Nichtzustellbarkeit der Daten an die zweite Kommunikationseinheit in der Übertragungszustand-Nachricht eine Information über eine Nicht-Zustellbarkeit der gesendeten Daten vorgesehen.

Durch das erfindungsgemäße Verfahren ist die erste Kommunikationseinheit bzw. ein Versender von Daten in der Lage, zu erkennen, dass die von ihm versendeten Daten der zweiten Kommunikationseinehit, bzw. einem vorgesehenen Empfänger nicht zugestellt werden konnten. Nach den aus dem Stand der Technik bekannten Verfahren konnte der Versender von Daten bislang nicht erkennen, ob die Daten, beispielsweise aufgrund einer fehlerhaften Empfängeradresse, einem Empfänger nicht zugestellt werden konnten oder ob der Empfänger den Erhalt der Daten nicht gewünscht hat. Diese Information ist für den Versender der Daten wichtig, da er im ersten Fall versuchen könnte, die Daten nochmals zu übertragen, während im zweiten Fall eine solche wiederholte Übertragung nicht sinnvoll ist, da der Empfänger bereits bewusst entschieden hat, die Daten nicht erhalten zu wollen.

Um zu gewährleisten, dass zu übertragende Daten auf einem aktuellen Stand gehalten werden, kann der Versender der Daten einen Gültigkeitszeitraum vorgeben, innerhalb welchem die Daten dem Empfänger zugestellt werden müssen. Das erfindungsgemäße Verfahren kann daher vorteilhafterweise so ausgestaltet sein, dass die Information über eine Nicht-Zustellbarkeit der gesendeten Daten in der Übertragungszustand-Nachricht vorgesehen wird, wenn die Daten der zweiten Kommunikationseinheit nicht innerhalb des vorgegebenen Gültigkeitszeitraums zugestellt wurden. In diesem Fall kann der Versender der Daten bei Nicht-Zustellbarkeit der Daten entscheiden, ob er die Daten nochmals an die zweite Kommunikationseinheit (Empfänger) versendet oder ob die Daten bereits nicht mehr aktuell sind und daher nicht mehr verwendet werden sollen.

Eine Möglichkeit, die Nicht-Zustellbarkeit der gesendeten Daten an die zweite Kommunikationseinheit zu erkennen, besteht darin, innerhalb eines Datenversendeprotokolls, das bei der Übertragung von Daten zwischen der ersten und der zweiten Kommunikationseinheit verwendet wird, sogenannte Bestätigungsmeldungen zu implementieren. Mittels solcher Bestätigungsmeldungen benachrichtigt der Empfänger von Daten oder Nachrichten den Sender oder unter Umständen eventuelle im Datenübertragungsweg vorgesehene Vermittlungsstellen, dass er die Daten oder Nachrichten ordnungsgemäß erhalten hat. "Ordnungsgemäß erhalten" bedeutet, insbesondere im Zusammenhang mit der vorliegenden Beschreibung, dass der Empfänger oder die zweite Kommunikationseinheit den Inhalt der übertragenen Daten oder Nachrichten vollständig erkennen kann. Daher kann beim erfindungsgemäßen Verfahren festgelegt werden, dass die Nicht-Zustellbarkeit der gesendeten Daten vorliegt, wenn der ordnungsgemäße Erhalt der gesendeten Daten und/oder der Erhalt einer Empfängerbenachrichtigungs-Mitteilung bezüglich der an die zweite Kommunikationseinheit zu übertragenden Daten von der zweiten Kommunikationseinheit nicht durch eine jeweils zugehörige Bestätigungs-Meldung quittiert wird. Es sei bemerkt, dass es sich bei der Empfängerbenachrichtigungs-Mitteilung um eine Mitteilung an die zweite Kommunikationseinheit handelt, um diese zu benachrichtigen, dass Daten an sie übertragen werden sollen.

Es kann in Telekommunikationssystemen vorgesehen sein, dass Daten von einem Sender nicht direkt zu einem Empfänger weitergeleitet werden, sondern der Empfänger erst eine Benachrichtigung erhält, dass der Wunsch besteht, ihm Daten zuzusenden. Nach Erhalt einer solchen Empfängerbenachrichtigungs-Mitteilung kann der Empfänger dann wählen, ob er die Daten sofort oder später empfangen bzw. zugesendet haben möchte oder ob er vom Erhalt der Daten absehen will.

Um eine effiziente Datenübertragung zwischen der ersten und der zweiten Kommunikationseinheit zu gewährleisten, kann das Telekommunikationsnetz gemäß einer weiteren vorteilhaften Ausgestaltung eine Vermittlungsanordnung umfassen, über die die Daten von der ersten zu der zweiten Kommunikationseinheit übertragen werden. Dabei kann die Vermittlungsanordnung so ausgebildet sein, dass sie in der Lage ist, die Nicht-Zustellbarkeit der gesendeten Daten, beispielsweise durch Abfragen oder Erfassen von Bestätigungs-Meldungen, feststellen. Es sei bemerkt, dass wenn eine Vermittlungsanordung von der ersten Kommunikationseinheit Daten empfängt, sie diesbezüglich die zweite Kommunikationseinheit mit der oben erwähnten Empfängerbenachrichtigungs-Mitteilung informieren kann. Weiterhin kann es Aufgabe einer solchen Vermittlungsanordnung sein, die Übertragungszustand-Nachricht an die erste Kommunikationseinheit zu versenden, und sie somit über den Zustand der zu übertragenen Daten zu informieren. Eine solche Vermittlungsanordnung innerhalb des Telekommunikationsnetzes kann beispielsweise in einem Vermittlungsknoten des Netzes vorgesehen sein, die Vermittlungsanordnung kann beispielsweise aber auch über mehrere Vermittlungsknoten verteilt sein oder in Einheiten implementiert sein, die ansonsten keine Vermittlungsknoteneigenschaften besitzen, aber dennoch ins Telekommunikationsnetz eingebunden sind.

Besonders effektiv lassen sich verschiedenste Daten, insbesondere mit multimedialen Inhalten, unter Verwendung des "Multimedia Messaging Service" (MMS) versenden, welcher einen festgelegten Standard zum Formatieren und Versenden von Nachrichten und Daten mit mulitmedialen Inhalten (MMs: Multimedia Messages = Multimedianachrichten) bereitstellt [1,2]. Vorteilhafterweise kann MMS durch Verwendung des "Wireless Application Protocol" (WAP) realisiert werden [3,4,5,6]. Das WAP bietet die Möglichkeit, in Mobilfunknetzen auf effiziente Weise verschiedenste Sorten von Daten, wie beispielsweise Texte, Bilder, Videos und/oder Audiodaten zu übertragen sowie auf das Internet zugreifen zu können. Genauere Erläuterungen, wie Daten mittels MMS über WAP übermittelt werden können, sind beispielsweise den Referenzen [3,4,5] dieser Beschreibung zu entnehmen.

Bei der Verwendung von Multimedia-Nachrichten des MMS über WAP sind verschiedene Datenübertragungs- und Nachrichtensendungen vorgesehen. Innerhalb des WAP-Protokolls, wie es in Referenz 5 dieser Beschreibung dargestellt ist, wird jeder dieser Sendungstypen innerhalb der Nachricht durch ein Datenfeld "X-Mms-Message-Type" beschrieben.

So wäre innerhalb des erfindungsgemäßen Verfahrens eine Empfängerbenachrichtigungs-Mitteilung eine MMS-über-WAP-Mitteilung der Kategorie "m-notification.ind" [5].

Die Versendung von Multimedia-Nachrichten mit dem WAP-Protokoll sieht das Handling und die Zwischenspeicherung der Multimedia-Nachricht durch eine als "Mms-Relay/Server" bezeichnete Vermittlungsstelle vor. Von dieser aus werden beispielsweise zu übertragende Daten an den Empfänger versendet.

Innerhalb des erfindungsgemäßen Verfahrens hat die Sendung der Multimedia-Nachricht an den Empfänger vorzugsweise die WAP-Kategorie "m-retrieve.conf", wie sie in Referenz [5] beschrieben wird.

Die erfindungsgemäße Übertragungszustand-Nachricht an den Versender der zu übertragenden Daten kann dann entsprechend des WAP-Protokolls der Kategorie "m-delivery.ind" zugeordnet werden.

Innerhalb des WAP-Protokolls kann in Übertragungszustand-Nachrichten vom Typ "m-delivery.ind" ein Feld mit der Bezeichnung "X-Mms-Status" vorgesehen sein, in welchem der Übertragungszustand der zu versendenden Daten niedergelegt ist. Vorteilhafterweise wird im erfindungsgemäßen Verfahren in diesem Feld eine der "Nicht-Zustellbarkeit" zugeordnete Zahlen- oder Ziffernkombination hinterlegt, wenn die Nicht-Zustellbarkeit der Daten an die zweite Kommunikationseinheit gegeben ist. Im Rahmen der bisher bekannten Parameter kann dafür insbesondere der Wert "<Octet 133>" verwendet werden.

Als Kommunikationseinheiten im Rahmen der vorliegenden Erfindung können beispielsweise Telekommunikationsgeräte mit einem Mobilfunk-Modul verwendet werden. Dies können beispielsweise Mobiltelefone oder auch PCs (Personalcomputer), Laptops, Palmtops, Organizer oder PDAs (PDA: Personal Digital Assistant) sein, welche ein Mobilfunk-Telekommunikationsmodul umfassen oder beispielsweise über eine Drahtverbindung oder ein drahtloses lokales Netzwerk (z.B. Bluetooth, Infrarotschnittstelle) mit einem Mobiltelefon verbunden sind.

Das Telekommunikationsnetz kann zumindest bereichsweise als Mobilfunknetz ausgebildet sein. Das Mobilfunknetz und/oder die Kommunikationseinheiten können beispielsweise gemäß einem der gängigen Mobilfunkstandards, wie beispielsweise dem GSM-Standard" dem GPRS-Standeard, dem EDGE-Standard, dem UMTS-Standard oder einem der verschiedenen CDMA-Standards ausgebildet sein. Dass das Telekommunikationsnetz zumindest bereichsweise als Mobilfunknetz ausgebildet sein kann, bedeutet, dass zumindest ein Teil des Übertragungsweges zwischen der ersten und der zweiten Telekommunikationseinheit innerhalb eines Mobilfunknetzes verläuft. Weitere Teile des Übertragungsweges können beispielsweise im Internet, in Datennetzwerken und/oder in Telekommunikations-Festnetzen oder in Kombinationen davon verlaufen. Es ist aber auch möglich, dass das Telekommunikationsnetz insgesamt als Mobilfunknetz oder Kombination verschiedener Mobilfunknetze ausgebildet ist.

Gemäß einem weiteren Aspekt wird eine Vermittlungsanordnung zur Übertragung von Daten in einem Telekommunikationsnetz von einer ersten Kommunikationseinheit zu einer zweiten Kommunikationseinheit geschaffen, wobei die Vermittlungsanordnung eine Einrichtung zum Erstellen bew. Erzeugen einer Übertragungszustand-Nachricht umfasst, die den an die zweite Kommunikationseinheit zu übertragenden Daten zugeordnet ist, wobei die Einrichtung zum Erstellen der Übertragungszustand-Nachricht ferner eine Information über eine Nicht-Zustellbarkeit der zu übertragenden Daten in die Übertragungszustand-Nachricht integriert, wenn die Daten der zweiten Kommunikationseinheit nicht zustellbar sind.

Mit der beschriebenen Vermittlungsanordnung ist es möglich, dem Versender bzw. der ersten Kommunikationseinheit einer Nachricht mitzuteilen, wenn Daten, welche er an einen Empfänger, bzw. die zweite Kommunikationseinheit versendet hat, dem Empfänger überhaupt nicht zustellbar waren. Der Versender kann beispielsweise daraufhin entscheiden, die entsprechenden Daten nochmals zu senden. Gegenüber dem bisher diesbezüglich bekannten Stand der Technik erhält der Versender damit die Möglichkeit, die Nichterreichbarkeit eines Empfängers von dem Zustand zu unterscheiden, in welchem der Empfänger für ihn bereitgestellte Daten nicht abgerufen hat, da er den Empfang der Nachrichten nicht gewünscht hat oder lediglich verhindert war, die Daten abzurufen (beispielsweise wegen technischer Probleme).

Um einen möglichst aktuellen Zustand der zu versendenden Daten zu gewährleisten, kann es vorgesehen sein, dass die Einrichtung zum Erstellen der Übertragungszustand-Nachricht der Vermittlungsanordnung die Information über die Nicht-Zustellbarkeit der zu übertragenden Daten in der Übertragungszustand-Nachricht vorsieht, wenn die Daten der zweiten Kommunikationseinheit nicht innerhalb eines vorgebbaren Gültigkeitszeitraums zustellbar sind. Ein solcher Gültigkeitszeitraum kann beispielsweise vom Versender der Daten oder auch innerhalb des Telekommunikationsnetzes (beispielsweise durch eine Standard-Einstellung) festgelegt werden. Beispielsweise kann ein Gültigkeitszeitraum auch im Benutzerprofil eines vorgesehen Empfängers der Daten hinterlegt sein. Die Einführung eines Gültigkeitszeitraums, nach welchem zu übersendende Daten einem Empfänger nicht mehr zugestellt werden, stellt sicher, dass immer nur aktuelle Daten zur Übertragung anstehen. Damit wird vermieden, dass beispielsweise Mobilfunknetze oder deren Vermittlungsanordnungen durch alte, nicht mehr aktuelle Nachrichten belastet oder gar überlastet werden.

Der Empfänger kann, wenn er die Empfängerbenachrichtigungs-Mitteilung oder die Nachrichtensendung bzw. Multimedianachricht erhalten hat, der Vermittlungsanordnung mitteilen, dass er die Mitteilung oder die Nachricht (ordnungsgemäß) erhalten hat. Ordnungsgemäß in diesem Zusammenhang bedeutet, wie vorstehend bereits erwähnt, dass er den Inhalt der jeweiligen Nachrichten vollständig erkennen kann. Hat ein Benutzer beispielsweise sein Telekommunikationsgerät über einen kompletten Zeitraum nicht eingeschaltet oder ist es funktionsuntüchtig, wird die Vermittlungsanordnung keine Bestätigungsmeldung zu entsprechenden Sendungen an die zweite Kommunikationseinheit erhalten.

Die Feststellung, wann die "Nicht-Zustellbarkeit" von gesendeten Daten vorliegt, kann für die Vermittlungsanordnung dann vorliegen, wenn der ordnungsgemäße Erhalt der gesendeten Daten oder einer Empfängerbenachrichtigungs-Mitteilung an die zweite Kommunikationseinheit bezüglich der gesendeten Daten nicht durch eine jeweils zugehörige Bestätigungsmeldung quittiert wird. Es kann in der Vermittlungsanordnung beispielsweise vorgesehen sein, dass die zu übertragenden Daten in der Vermittlungsanordnung zwischengespeichert werden und der vorgesehene Empfänger erst durch eine Benachrichtigung (die Empfängerbenachrichtigungs-Mitteilung) informiert wird, dass eine Nachricht mit beispielsweise entsprechenden Multimediadaten, für ihn bereitliegt.

Im Falle, dass der Empfänger, insbesondere nach der Übersendung einer Empfängerbenachrichtigungs-Mitteilung den Erhalt der zugeordneten Nachricht nicht wünscht, würde zwar der ordnungsgemäße Erhalt der Empfängerbenachrichtigungs-Mitteilung von der zweiten Kommunikationseinheit quittiert, aber nachfolgend die Übersendung der eigentlichen Nachricht nicht angefordert. Somit findet trotz Benachrichtigung der zweiten Kommunikationseinheit über zu übertragende Daten bzw. Nachrichten keine Zustellung statt.

Um den Versender (die erste Kommunikationseinheit) über den jeweiligen Übertragungszustand der von ihm versendeten Daten zu informieren, kann es vorgesehen sein, dass die Vermittlungsanordnung eine Einrichtung zum Übertragen der Übertragungszustandnachricht an die erste Kommunikationseinheit umfasst. Die Vermittlungsanordnung kann z.B. die Übertragungszustand-Nachricht direkt an den Versender der betreffenden Daten versenden oder auch über eine andere Vermittlungsanordnung. Die Übertragungszustand-Nachricht könnte beispielsweise aber auch an einen Nachrichtenspeicher (ein sogenanntes Postfach oder "Mailbox") des Versenders der Daten übermittelt werden, bei welchem er die Übertragungszustand-Nachricht dann abrufen kann.

weitere bevorzugte Ausführungsformen sind in den Unteransprüchen enthalten.

Im Folgenden wird die Erfindung beispielhaft mit Bezug auf die beiliegenden Figuren erläutert. Es zeigen:
- Figur 1: eine schematische Darstellung eines Telekommunikationssystem zur Übertragung von Multimedia-Nachrichten (MMs);
- Figur 2: ein Diagramm zur Darstellung des Informationsflusses bei Versenden einer MM innerhalb des WAP;
- Figur 3: mögliche Zustände des X-Mms-Status einer "m-delivery.ind" Sendebestätigungs-Nachricht einer Multimedialen Nachricht über WAP;
- Figur 4: ein Beispiel einer "m-delivery.ind"-Sendebestätigungs-Nachricht einer MMS-Nachricht über WAP.

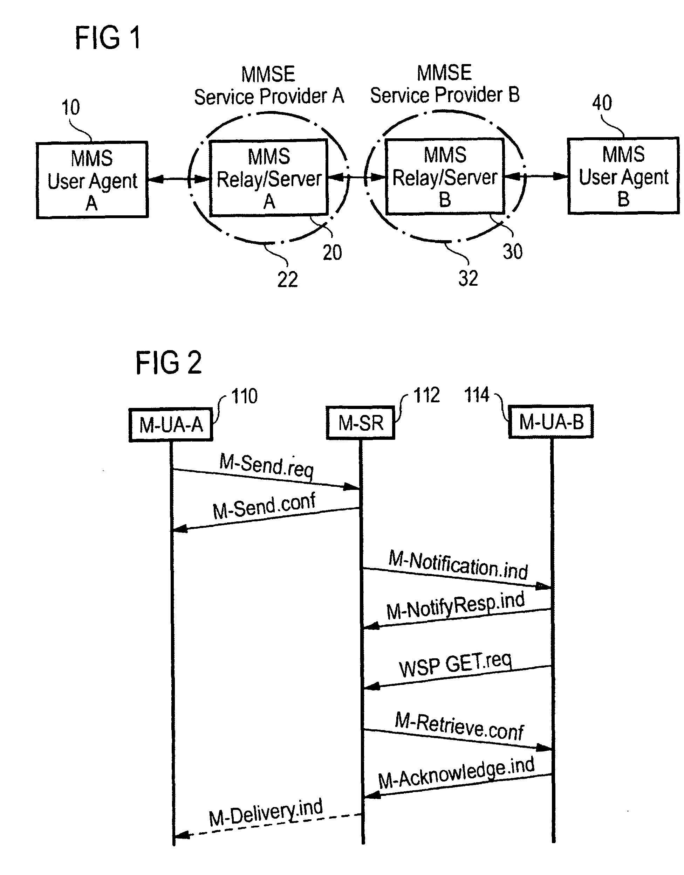

In Abbildung 1 ist eine MMS-Netzwerk-Architektur nach heutigem Stand der Technik gemäß 3GPP (Ref. [1,2]) dargestellt. Als eine erste MMS-Nutzerapplikation A (MMS User Agent A) 10 ist eine Applikation beispielsweise auf einem Mobilfunkgerät, das einer ersten Kommunikationseinheit entspricht, oder auf einem an ein Mobilfunkgerät angeschlossenen Gerät (z.B. Laptop, o.ä.) dargestellt, die MMS realisiert. Weiterhin ist eine erste MMS-Verbindungseinheit 20 beispielsweise in Form eines sogenannten "MMS-Relay/Server" dargestellt, die in einem Zuständigkeitsbereich MMSE (MMSE: Multimedia Messaging Service Environment = Multimedianachrichtendienst-Umgebung) 22 eines MMS Service Providers bzw. Dienstanbieters A den MMS-Nutzerapplikationen die MMS-Funktionalität zur Verfügung stellt. Nach dem Stand der Technik existiert jeweils nur ein MMS-Verbindungseinheit 20 pro MMSE 22. Die MMS-Verbindungseinheit 20 des Service Providers A ist mit einer weiteren MMS-Verbindungseinheit 30 eines Service Providers bzw. Dienstanbieters B verbunden, welche wiederum Kontakt zu einem Empfänger 40 hat. Dieser Empfänger 40 wird durch eine zweite MMS-Nutzerapplikation B (MMS User Agent B) 40 repräsentiert, die ebenso eine Applikation, beispielsweise auf einem Mobilfunkgerät, das einer zweiten Kommunikationseinheit entspricht, darstellt.

Eine Multimedia-Nachricht wird vom Versender 10 an die entsprechende Verbindungseinheit 20 seines Service Providers A 22 übermittelt. Da der Empfänger der Nachricht 40 sich in einem Zuständigkeitsbereich 32 des zweiten Service Providers B aufhält, wird die Multimedia-Nachricht an die für den zweiten Zuständigkeitsbereich 32 verantwortliche Verbindungseinheit 30 vermitteln. Von dieser Vermittlungseinheit wird die Nachricht dann an den Empfänger der Multimedia-Nachricht 40 weitergeleitet.

Die Verbindungen zwischen Sender 10, MMS-Verbindungseinheit A 20, MMS-Verbindungseinheit B 30 und Empfänger 40 sind in Figur 1 jeweils mit einem Hin- und Rückpfeil dargestellt, um zu dokumentieren, dass beim Weiterleiten der Nachricht auch entsprechende Empfangsbestätigungsmeldungen an die jeweiligen Versender (Sender 10, MMS-Verbindungseinheit A 20 und MMS-Verbindungseinheit 30) zurückgesendet werden. Es sei bemerkt, dass die MMS-Verbindungeinheiten 20 und 30 als eine Vermittlungsanordung dienen können.

Der beispielhafte Verlauf einer Versendung einer MultimediaNachricht von einem Sender 110 (z.B. entsprechend Sender 10 aus Fig. 1) zu einem Empfänger 114 (z.B. entsprechend Empfänger 40 aus Fig.1) über eine MMS-Vermittlungseinheit 112 (z.B. entsprechend einer oder beiden Einheiten 20, 30 von Fig. 1) ist detailliert in Figur 2 dargestellt. Die Abbildung 2 zeigt ein Mitteilungsfluss-Diagramm nach heutigem Stand der Technik gemäß [4], wobei der Austausch der WAP-Mitteilungen bzw. WAP-Informationen zwischen drei beteiligten Instanzen, der MMS-Nutzerapplikation A (M-UA-A) 110, der MMS-Vermittlungseinheit (M-SR) 112 und der MMS-Nutzerapplikation B (M-UA-B) 114 bei Versand bzw. Empfang einer MM dargestellt ist. Der Datenversender 110 umfasst zumindest ein Telekommunikationsgerät, ebenso umfasst der Empfänger ein Telekommunikationsgerät. Diese Telekommunikationsgeräte können, wie bereits erwähnt, beispielsweise als übliche Handys oder als Geräte mit weiteren Eingabe- oder Anzeigefunktionen, wie beispielsweise Laptops mit Mobilfunk-Modul, ausgebildet sein.

Im in Figur 2 dargestellten Ausführungsbeispiel ist die Übertragung von MMs unter Verwendung des WAP-Standards gezeigt, wie sie zum Beispiel bei der Übertragung von Bild-, Video-, Audio- und formatierten Textdaten im UMTS-Standard (Universal mobile telecommunication standard) Verwendung findet. Die vorliegende Erfindung ist aber entsprechend auch auf andere Telekommunikations-Standards, wie beispielsweise GSM oder DECT (DECT: Digital European Cordless Telephone) übertragbar.

Zwischen den drei beteiligten Instanzen 110, 112, 114 werden die Informationen bzw. Mitteilungen oder Nachrichten ausgetauscht, die im Flussdiagramm in Abbildung 2 mit Pfeilen dargestellt sind. Eine Multimedia-Nachricht (MM) besteht grundsätzlich aus einem Kopf (Header) und optional aus einem Datenteil (Body), der die Multimediaobjekte enthalten kann.

Eine im Telekommunikationsgerät des Versenders 110 verfaßte oder über dieses weiterzuleitende Multimedia Message (MM) kann einen oder mehrere Einheiten bzw. Objekte, beispielsweise einzelne Bilder, Filmsequenzen, Texte oder ähnliches, enthalten. Die MM wird zunächst, wie in Figur 2 dargestellt, als eine Anfrage-Sendung (diese trägt im WAP-Protokoll den Namen "M-Send.req") an den Provider/die Vermittlungseinheit 112 versandt. Von dort wird die eingegangene MM mit einer Rücksendung "M-Send.conf" an den Versender 110 quittiert.

Zeitlich darauffolgend wird von der Vermittlungseinheit 112 eine Empfängerbenachrichtigungs-Mitteilung "M-Notification.ind" an den vorgesehenen Empfänger 114 gesandt, mit der dieser darüber informiert wird, dass für ihn eine MM bei der Vermittlungseinheit 112 zum Herunterladen bereitliegt. Hierüber erhält die Vermittlungseinheit 112 beispielsweise automatisch die quittierende Rückmeldung bzw. Empfangsbestätigungsmitteilung "M-NotifyResp.ind" vom Telekommunikationsgerät 114 des Empfängers, wenn dieser die Empfängerbenachrichtigungs-Mitteilung ordnungsgemäß erhalten hat.

Erst auf Anforderung durch den Empfänger 114 mit der Anforderungs-Nachricht "WSP GET.req" wird von der Vermittlungseinheit 112 die MM mit der MM-Sendung "M-Retrieve.conf" an den Empfänger weitergeleitet.

Eine weitere Empfangsbestätigungs-Mitteilung, jetzt mit der der Kategorie "M-Acknowledge.ind", quittiert den Empfang der MM.

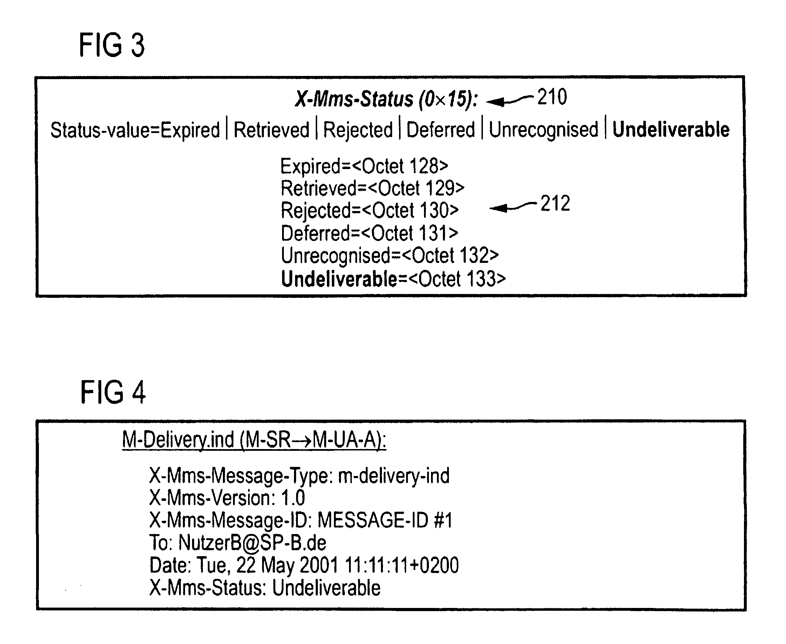

Schließlich schickt die Vermittlungseinheit 112, wenn vom Versender 110 gewünscht, eine Nachricht "M-Delivery.ind" über den Status der Zustellung der MM an diesen. Es sei bemerkt, dass dabei die Übertragungszustands-Nachricht von einer dafür vorgesehenen ersten Einrichtung (nicht dargestellt) der Vermittlungseinheit 112 erzeugt wird, und dann von einer zweiten dafür vorgesehenen Einrichtung (ebenso nicht dargestellt) von 112 an den Versender 110 versendet wird. Dabei enthält die Mitteilung "M-Delivery.ind" im WAP-Protokoll, auf welches sich das vorliegende Beispiel bezieht, ein Statusfeld ("X-Mms-Status") 210 (Fig. 3), welches den Zustand der MM beim Versenden der Status-Nachricht "M-Delivery.ind" beschreibt.

In Figur 3 sind generell die möglichen Zustände 212 des Statusfelds "X-Mms-Status" 210 in der Nachricht des Typs "M-Delivery.ind", die ausführlich in Figur 4 erläutert wird, dargestellt. Bisher werden in den MMS-Spezifikation [2,5] mehrere Stati festgelegt, die in einer MMS-Zustellstatusbenachrichtigung bzw. Übertragungszustand-Nachrichten "M-Delivery.ind" übertragen werden. Die verschiedenen Stati zeigen an, ob die MM erfolgreich an den Empfänger übertragen wurde (Status: "retrieved" = empfangen), ob die MM vom Empfänger abgelehnt wurde (Status: "rejected" = abgelehnt), ob der Empfänger die Benachrichtigung über den Eingang der MM in dessen Postfach erhalten hat und diese später herunterladen kann (Status: "deferred" = verzögert), ob der Empfänger die MM nicht erkannt hat (Status: "unrecognized" = nicht-erkannt) und ob die MM nicht innerhalb des Gültigkeitszeitraumes heruntergeladen und damit nicht vollständig empfangen hat (Status: "expired" = abgelaufen).

Erfindungsgemäß kann das Statusfeld "X-Mms-Status" zusätzlich einen Status "unzustellbar" bzw "undeliverable" annehmen. Der neue Status ("unzustellbar"/"undeliverable") wird von der MMS-Verbindungseinheit 112 (s. Fig. 2) in der angeforderten Übertragungszustand-Meldung "M-Delivery.ind" gesetzt, wenn eine MM innerhalb ihres Gültigkeitszeitraumes nicht zugestellt werden konnte, das heißt, dass die Verbindungseinheit vom Empfänger weder die (erste) Empfangsbestätigungs-Mitteilung "M-NotifyResp.ind" noch die zweite Empfangsbestätigungs-Mitteilung "M-Acknowledge.ind" der MM-Übertragung erhalten hat. Das bedeutet, dass weder die MMS-Empfängerbenachrichtigungs-Mitteilung (M-Notification.ind) noch die MM-Sendung (M-retrieve.conf) den Empfänger ordnungsgemäß erreicht hat.

In Figur 3 ist ebenfalls dargestellt, wie die entsprechenden Zustände des "X-Mms-Status"-Registers des vorliegenden Beispiels System-intern codiert werden. So werden den bekannten Zuständen "Expired" bis "Unrecognised" die Werte "<Octet 128>" bis "<Octet 132>", während der Zustand "Undeliverable" im System mit dem Wert "<Octet 133>" dargestellt wird.

Figur 4 zeigt eine Übertragungszustand-Nachricht der Kategorie "M-delivery.ind", wie sie an den Versender 10, 110 einer Multimedia-Nachricht durch das WAP-Protokoll zugeschickt wird. In der Überschrift wird dargestellt, dass die Nachricht von der Vermittlungseinheit 20, 30, 112 zum Versender 10, 110 geschickt wird. In einem ersten Datenfeld "X-Mms-Message-Type" wird dargestellt, um welche Art der Nachrichten es sich handelt. In diesem Fall ist es die genannte Benachrichtigung des Versenders der MM über den Übertragungszustand der MM-Nachricht, welche mit "m-delivery-ind" innerhalb des WAP-Protokolls kategorisiert ist. Im nächsten Datenfeld, welches mit "X-Mms-version" bezeichnet ist, wird die Version des verwendeten MMS-WAP-Protokolls dokumentiert. Im darauffolgenden Feld mit der Bezeichnung "X-Mms-Message-ID" ist die interne Nummer der Multimedia-Nachricht (MM) notiert, auf welche sich die Übertragungszustand-Nachricht bezieht. Im Feld mit der Bezeichnung "To" steht der Empfänger, während im Datumsfeld mit der Bezeichnung "Date" das Datum steht, an welchem die Multimedia-Nachricht das letzte Mal behandelt wurde. Dies kann beispielsweise das Datum der Versendung an den Empfänger, das Datum der Ablehnung oder auch das Ablaufdatum des Gültigkeitszeitraums der Versendung an den Empfänger sein. Im letzten Feld dieser Übertragungszustands-Nachricht mit der Bezeichnung "X-Mms-Status" wird der eigentliche Übertragungszustand der Multimedia-Nachricht dargestellt. Im vorliegenden Beispiel ist die MM nicht an den Empfänger auslieferbar bzw. nicht zustellbar, d.h. der Empfänger hat beispielsweise die Empfängerbenachrichtigungs-Mitteilung oder auch mehrere Empfängerbenachrichtigungs-Mitteilungen nicht quittiert, weil beispielsweise sein Telekommunikationsgerät nie eingeschaltet war oder defekt ist.

Die vorliegende Erfindung beschreibt ein Verfahren zur Übertragung von Daten, insbesondere mit multimedialen Inhalten von einem Sender an einen Empfänger, wobei die Nicht-Zustellbarkeit der Daten an den Empfänger dem Sender mitgeteilt wird, wenn die von ihm gesendete Nachricht nicht zustellbar ist. Der Sender kann dann gegebenenfalls die Nachricht nochmals verschicken. Dies ermöglicht eine effiziente Handhabung von Multimedia-Nachrichten, da die Nachricht beispielsweise nur im Falle der Nicht-Zustellbarkeit ein zweites Mal versendet würde und nicht im Falle, dass der Empfänger die Zustellung nicht wünscht. Diese Unterscheidung war im bisherigen Stand der Technik nicht möglich.

### Referenzen

### (Ref. [3], [4], [5], [6] sind z.B bei "http://www.wapforum.org/" erhältlich)

[1] 3G TS 22.140 version 4.1.0, Release 4; Third Generation Partnership Project; Technical Specification Group Terminals; Multimedia Messaging Service (MMS); Service Aspects; Stage 1, March 2001.
[2] 3G TS 23.140 version 4.2.0, Release 4; Third Generation Partnership Project; Technical Specification Group Terminals; Multimedia Messaging Service (MMS); Functional Description; Stage 2, March 2001.
[3] WAP-205-MMS Architecture Overview, Draft Specification; Wireless Application Protocol, Multimedia Messaging Service; Architecture Overview Specification, 25. April 2001.
[4] WAP-206-MMS Client Transactions, Draft Specification; Wireless Application Protocol; WAP Multimedia Messaging Service Client Transactions; 12. April 2001.
[5] WAP-209-MMS Encapsulation, Draft Specification Change Document; Wireless Application Protocol; Multimedia Messaging Service; Message Encapsulation; 5. January 2002.
[6] WAP-203-WSP, Specification, Approved Version, Wireless Application Protocol: Wireless Session Protocol; 4 May 2000

### Abkürzungsverzeichnis:

- GSM: Global System for Mobile Communication
- SMS: Short Message Service
- UMTS: Universal Mobile Telecommunication System
- WAP: Wireless Application Protocol
- WSP: Wireless Session Protocol
- DECT: Digital European Cordless Telephone

### MMS spezifische Abkürzungen:

- MM: Multimedianachricht (Multimedia Message)
- MMS: Multimedia Messaging Service
- M-UA: MMS-Nutzerapplikation
- M-SR: MMS-Verbindungseinheit
- M-Send.req: MMS-Sendeanfrage
- M-Send.conf: MMS-Sendebestätigung
- M-Notification.ind: MMS-Empfängerbenachrichtigung
- M-NotifyResp.ind: MMS-Empfängerbenachrichtigungsbestätigung
- W-WSP GET.req: MMS-Zustellanfrage
- M-Retrieve.conf: MMS-Zustellnachricht
- M-Acknowledge.ind: MMS-Zustellungsbestätigung
- M-Delivery.ind: MMS-Zustellstatusbenachrichtigung

## Patentansprüche

1. Verfahren zur Übertragung von Daten, insbesondere mit multimedialen Inhalten, von einer ersten Kommunikationseinheit (10; 110) an eine zweite Kommunikationseinheit (40; 114) in einem Telekommunikationsnetz (10, 20, 30, 40; 110, 112, 114), wobei der ersten Kommunikationseinheit (10; 110) mindestens eine den Daten zugeordete Übertragungszustand-Nachricht (M-Delivery.ind) übermittelt wird, wobei
im Falle einer Nicht-Zustellbarkeit der Daten an die zweite Kommunikationseinheit (40; 114) in der Übertragungszustand-Nachricht (M-Delivery.ind) eine Information über die Nicht-Zustellbarkeit der gesendeten Daten vorgesehen wird,
**dadurch gekennzeichnet,**
**dass** die Nicht-Zustellbarkeit der gesendeten Daten vorliegt, wenn der ordnungsgemäße Erhalt der gesendeten Daten oder einer Empfängerbenachrichtigungs-Mitteilung (M-Notification.ind) über die an die zweite Kommunikationseinheit (40; 114) zu übertragenden Daten von der zweiten Kommunikationseinheit (40; 114) nicht durch eine jeweils zugehörige Bestätigungs-Meldung (M-NotifyResp.ind, M-Acknowledge.ind) quittiert wird.

2. Verfahren nach Anspruch 1,
**dadurch gekennzeichnet,**
**dass** die Information über die Nicht-Zustellbarkeit der gesendeten Daten in der Übertragungszustand-Nachricht (M-Delivery.ind) vorgesehen wird, wenn die Daten der zweiten Kommunikationseinheit (40; 114) nicht innerhalb eines vorgebbaren Gültigkeitszeitraums zustellbar sind.

3. Verfahren nach Anspruch 1 oder 2,
**dadurch gekennzeichnet,**
**dass** die Nicht-Zustellbarkeit der gesendeten Daten vorliegt, wenn der ordnungsgemäße Erhalt der gesendeten Daten und einer Empfängerbenachrichtigungs-Mitteilung (M-Notification.ind) über die an die zweite Kommunikationseinheit (40; 114) zu übertragenden Daten von der zweiten Kommunikationseinheit (40; 114) nicht durch eine jeweils zugehörige Bestätigungs-Meldung (M-NotifyResp.ind, M-Acknowledge.ind) quittiert wird.

4. Verfahren nach einem der Ansprüche 1 bis 3,
**dadurch gekennzeichnet,**
**dass** das Telekommunikationsnetz (10, 20, 30, 40; 110, 112, 114) eine Vermittlungsanordnung (20, 30; 112) umfaßt, über die die Daten von der ersten (10, 110) zu der zweiten (40, 114) Kommunikationseinheit übertragen werden, wobei die Vermittlungsanordnung (20, 30, 112) die Nicht-Zustellbarkeit der gesendeten Daten feststellt und die Übertragungszustand-Nachricht (M-Delivery.ind) an die erste Kommunikationseinheit (10, 110) versendet.

5. Verfahren nach Anspruch 1 oder 4,
**dadurch gekennzeichnet,**
**dass** die Daten mittels eines "Multimedia Messaging Service" (MMS) unter Verwendung eines "Wireless Application Protocol" (WAP) übertragen werden.

6. Verfahren nach Anspruch 5,
**dadurch gekennzeichnet,**
**dass** die Empfängerbenachrichtigungs-Mitteilung (M-notification.ind) eine MMS-Mitteilung der Kategorie "X-Mms-Message-Type: m-notification-ind" umfasst.

7. Verfahren nach Anspruch 5 oder 6,
**dadurch gekennzeichnet,**
**dass** die Daten an den Empfänger mittels mindestens einer MMS-Mitteilung der Kategorie "X-Mms-Message-Type: m-retrieve-conf" übertragen werden.

8. Verfahren nach einem der Ansprüche 5 bis 7,
**dadurch gekennzeichnet,**
**dass** die Übertragungszustand-Nachricht (M-Delivery.ind) eine MMS-Mitteilung der Kategorie "X-Mms-Message-Type: m-delivery-ind" umfasst.

9. Verfahren nach Anspruch 8,
**dadurch gekennzeichnet,**
**dass** die Information über die Nicht-Zustellbarkeit der gesendeten Daten im Datenfeld "X-Mms-Status" der Übertragungszustand-Nachricht (M-delivery.ind) durch den Wert: "<Octet 133>" dargestellt werden.

10. Verfahren nach einem der Ansprüche 1 bis 9,
**dadurch gekennzeichnet,**
**dass** die erste (10; 110) und/oder die zweite (40; 114) Telekommunikationseinheit ein Mobilfunk-Modul umfasst.

11. Verfahren nach einem der Ansprüche 1 bis 10,
**dadurch gekennzeichnet,**
**dass** das Telekommunikationsnetz (10, 20, 30, 40; 110, 112, 114) zumindest bereichsweise als Mobilfunknetz ausgebildet ist und die erste (10; 110) und/oder die zweite (40; 114) Kommunikationseinheit gemäß dem GSM-, GPRS, EDGE- oder/und UMTS-Standard arbeiten.

12. Vermittlungsanordnung (20, 30; 112) zur Übertragung von Daten in einem Telekommunikationsnetz (10, 20, 30, 40; 110, 112, 114), insbesondere nach einem Verfahren gemäß einem der vorstehenden Ansprüche, von einer ersten Kommunikationseinheit (10; 110) zu einer zweiten Kommunikationseinheit (40; 114), wobei
die Vermittlungsanordnung (20, 30; 112) eine Einrichtung zum Erstellen einer Übertragungszustand-Nachricht umfasst, die den an die zweite Kommunikationseinheit (40; 114) zu übertragenden Daten zugeordnet ist, wobei
die Einrichtung zum Erstellen der Übertragungszustand-Nachricht eine Information über eine Nicht-Zustellbarkeit der zu übertragendenden Daten in der Übertragungszustand-Nachricht (M-Delivery.ind) vorsieht, wenn die Daten der zweiten Kommunikationseinheit (40; 114) nicht zustellbar sind,
**dadurch gekennzeichnet,**
**dass** für die Einrichtung zum Erstellen der Übertragungszustand-Nachricht die Nicht-Zustellbarkeit der gesendeten Daten vorliegt, wenn der ordnungsgemäße Erhalt der gesendeten Daten oder einer Empfängerbenachrichtigungs-Mitteilung (M-Notification.ind) über die an die zweite Kommunikationseinheit (40; 114) zu übertragenden Daten von der zweiten Kommunikationseinheit (40; 114) nicht durch eine jeweils zugehörige Bestätigungs-Meldung (M-NotifyResp.ind, M-Acknowledge.ind) quittiert wird.

13. Vermittlungsanordnung nach Anspruch 12,
**dadurch gekennzeichnet,**
**dass** die Einrichtung zum Erstellen der Übertragungszustand-Nachricht die Information über die Nicht-Zustellbarkeit der zu übertragenden Daten in der Übertragungszustand-Nachricht (M-Delivery.ind) vorsieht, wenn die Daten der zweiten Kommunikationseinheit (40; 114) nicht innerhalb eines vorgebbaren Gültigkeitszeitraums zustellbar sind.

14. Vermittlungsanordnung nach Anspruch 12 oder 13,
**dadurch gekennzeichnet,**
**dass** für die Einrichtung zum Erstellen der Übertragungszustand-Nachricht die Nicht-Zustellbarkeit der gesendeten Daten vorliegt, wenn der ordnungsgemäße Erhalt der gesendeten Daten und einer Empfängerbenachrichtigungs-Mitteilung (M-Notification.ind) über die an die zweite Kommunikationseinheit (40; 114) zu übertragenden Daten von der zweiten Kommunikationseinheit (40; 114) nicht durch eine jeweils zugehörige Bestätigungs-Meldung (M-NotifyResp.ind, M-Acknowledge.ind) quittiert wird.

15. Vermittlungsanordnung nach einem der Ansprüche 12 bis 14,
**dadurch gekennzeichnet,**
**dass** die Vermittlungsanordnung (20, 30; 112) eine Einrichtung zum Übermitteln der Übertragungszustand-Nachricht an die erste Kommunikationseinheit (10; 110) umfasst.

## Claims

1. A method for transmitting data, particularly having multimedia contents, from a first communications unit (10; 110) to a second communications unit (40; 114) in a telecommunications network (10, 20, 30, 40; 110, 112, 114), whereby at least one transmission status message (M-Delivery.ind) assigned to the data is transmitted to the first communications unit (10; 110), whereby
in the event of the non-deliverability of the data to the second communications unit (40; 114), an item of information concerning the non-deliverability of the sent data is provided in the transmission status message (M-Delivery.ind), **characterized in that** non-deliverability of the data sent applies if the correct receipt of the data sent or of a recipient notification message (M-Notification.ind) concerning the data to be transmitted to the second communications unit (40; 114) is not acknowledged by the second communications unit (40; 114) by means of a respective associated confirmation message (M-NotifyResp.ind, M-Acknowledge.ind).

2. A method as claimed in Claim 1,
**characterized in that**
the item of information concerning the non-deliverability of the sent data is provided in the transmission status message (M-Delivery.ind) if the data cannot be delivered to the second communications unit (40; 114) within a definable period of validity.

3. A method as claimed in Claim 1 or 2,
**characterized in that**
non-deliverability of the data sent applies if the correct receipt of the data sent and of a recipient notification message (M-Notification.ind) concerning the data to be transmitted to the second communications unit (40; 114) is not acknowledged by the second communications unit (40; 114) by means of a respective associated confirmation message (M-NotifyResp.ind, M-Acknowledge.ind).

4. A method as claimed in one of Claims 1 to 3,
**characterized in that**
the telecommunications network (10, 20, 30, 40; 110, 112, 114) comprises a switching arrangement (20, 30; 112) by way of which the data is transmitted from the first communications unit (10, 110) to the second (40, 114), whereby the switching arrangement (20, 30, 112) establishes the non-deliverability of the data sent and sends the transmission status message (M-Delivery.ind) to the first communications unit (10, 110).

5. A method as claimed in Claim 1 or 4,
**characterized in that**
the data is transmitted by means of the "Multimedia Messaging Service" (MMS) by using the "Wireless Application Protocol" (WAP).

6. A method as claimed in Claim 5,
**characterized in that**
the recipient notification message (M-notification.ind) comprises an MMS message in the category "X-Mms-Message-Type: m-notification.ind".

7. A method as claimed in Claim 5 or 6,
**characterized in that**
the data is transmitted to the recipient by means of at least one MMS message in the category "X-Mms-Message-Type: m-retrieve-conf".

8. A method as claimed in one of Claims 5 to 7,
**characterized in that**
the transmission status message (M-Delivery.ind) comprises an MMS message in the category "X-Mms-Message-Type: m-delivery-ind".

9. A method as claimed in Claim 8,
**characterized in that**
the item of information concerning the non-deliverability of the data sent is represented by the value "<Octet 133>" in the data field "X-Mms-Status" of the transmission status message (M-delivery.ind).

10. A method as claimed in one of Claims 1 to 9,
**characterized in that**
the first telecommunications unit (10; 110) and/or the second (40; 114) comprises a mobile communication module.

11. A method as claimed in one of Claims 1 to 10,
**characterized in that**
the telecommunications network (10, 20, 30, 40; 110, 112, 114) is realized as a mobile communication network at least in areas and the first communications unit (10; 110) and/or the second (40; 114) operate(s) as defined by the GSM, GPRS, EDGE and/or UMTS standards.

12. A switching arrangement (20, 30; 112) for transmitting data in a telecommunications network (10, 20, 30, 40; 110, 112, 114), particularly according to a method defined by one of the foregoing claims, from a first communications unit (10; 110) to a second communications unit (40; 114), whereby
the switching arrangement (20, 30; 112) comprises an apparatus for producing a transmission status message which is assigned to the data to be transmitted to the second communications unit (40; 114), whereby
the apparatus for producing the transmission status message provides an item of information concerning the non-deliverability of the data to be transmitted in the transmission status message (M-Delivery.ind) if the data cannot be delivered to the second communications unit (40; 114),
**characterized in that**
with regard to the apparatus for producing the transmission status message, non-deliverability of the data sent applies if the correct receipt of the data sent or of a recipient notification message (M-Notification.ind) concerning the data to be transmitted to the second communications unit (40; 114) is not acknowledged by the second communications unit (40; 114) by means of a respective associated confirmation message (M-NotifyResp.ind, M-Acknowledge.ind).

13. A switching arrangement as claimed in Claim 12,
**characterized in that**
the apparatus for producing the transmission status message provides the item of information concerning the non-deliverability of the data to be transmitted in the transmission status message (M-Delivery.ind) if the data cannot be delivered to the second communications unit (40; 114) within a definable period of validity.

14. A switching arrangement as claimed in Claim 12 or 13,
**characterized in that**
with regard to the apparatus for producing the transmission status message, non-deliverability of the data sent applies if the correct receipt of the data sent and of a recipient notification message (M-Notification.ind) concerning the data to be transmitted to the second communications unit (40; 114) is not acknowledged by the second communications unit (40; 114) by means of a respective associated confirmation message (M-NotifyResp.ind, M-Acknowledge.ind).

15. A switching arrangement as claimed in one of Claims 12 to 14,
**characterized in that**
the switching arrangement (20, 30; 112) comprises an apparatus for transmitting the transmission status message to the first communications unit (10; 110).

## Revendications

1. Procédé pour la transmission de données, en particulier avec des contenus multimédia, d'une première unité de communication (10 ; 110) à une seconde unité de communication (40 ; 114) dans un réseau de télécommunication (10, 20, 30, 40 ; 110, 112, 114), au moins un message sur l'état de transmission attribué aux données (M-Delivery.ind) étant transmis à la première unité de communication (10 ; 110),
une information sur la non-délivrabilité des données envoyées étant prévue dans le cas d'une non-délivrabilité des données à la seconde unité de communication (40 ; 114) dans le message sur l'état de transmission (M-Delivery.ind),
**caractérisé en ce que**
la non-délivrabilité des données envoyées existe lorsque la réception correcte des données envoyées ou d'une notification d'information du destinataire (M-Notification.ind) relative aux données à transmettre à la seconde unité de communication (40 ; 114) n'est pas confirmée par la seconde unité de communication (40; 114) par un message de confirmation correspondante (M-NotifyResp.ind, M-Acknowledge.ind).

2. Procédé selon la revendication 1,
**caractérisé en ce que**,
l'information sur la non-délivrabilité des données envoyées est prévue dans le message sur l'état de transmission (M-Delivery.ind) transmis lorsque les données ne peuvent pas être délivrées à la seconde unité de communication (40 ; 114) dans les délais d'une période de validité prédéfinissable.

3. Procédé selon la revendication 1 ou 2,
**caractérisé en ce que**
la non-délivrabilité des données envoyées existe lorsque la réception correcte des données envoyées et d'une notification d'information du destinataire (M-Notification.ind) concernant les données à transmettre à la seconde unité de communication (40 ; 114) n'est pas confirmée par la seconde unité de communication (40 ; 114) par un message de confirmation correspondant (M-NotifyResp.ind, M-Acknowledge.ind).

4. Procédé selon l'une quelconque des revendications 1 à 3,
**caractérisé en ce que**
le réseau de télécommunication (10, 20, 30, 40 ; 110, 112, 114) comprend un dispositif de transmission (20, 30 ; 112) par lequel les données sont transmises de la première unité de communication (10, 110) à la seconde unité de communication (40, 114), le dispositif de transmission (20, 30, 112) constatant la non-délivrabilité des données envoyées et le message sur l'état de transmission (M-Delivery.ind) étant envoyé à la première unité de communication (10, 110).

5. Procédé selon la revendication 1 ou 4,
**caractérisé en ce que**
les données sont transmises au moyen d'un "Multimedia Messaging Service" d'un (MMS) avec l'utilisation d'un "Wireless Application Protocol" (WAP).

6. Procédé selon la revendication 5,
**caractérisé en ce que**
la notification d'information du destinataire (M-notification.ind) comprend une notification de MMS de la catégorie "X-Mms-Message-Type : m-notification-ind".

7. Procédé selon la revendication 5 ou 6,
**caractérisé en ce que**
les données sont transmises au destinataire au moyen d'au moins une notification de MMS de la catégorie "X-Mms-Message-Type : m-retrieve-conf".

8. Procédé selon l'une quelconque des revendications 5 à 7,
**caractérisé en ce que**
le message sur l'état de transmission (M-Delivery.ind) comprend une notification de MMS de la catégorie "X-Mms-Message-Type : m-delivery-ind".

9. Procédé selon la revendication 8,
**caractérisé en ce que**
l'information sur la non-délivrabilité des données envoyées est représentée dans le champ de données "X-Mms-Status" du message sur l'état de transmission (M-Delivery.ind) par la valeur : "<Octet 133>".

10. Procédé selon l'une quelconque des revendications 1 à 9,
**caractérisé en ce que**,
la première unité de télécommunication (10; 110) et/ou la seconde unité de télécommunication (40 ; 114) comprend(comprennent) un module de téléphonie mobile.

11. Procédé selon l'une quelconque des revendications 1 à 10,
**caractérisé en ce que**,
le réseau de télécommunication (10, 20, 30, 40 ; 110, 112, 114) est conçu au moins par endroits comme un réseau de téléphonie mobile et la première unité de communication (10; 110) et/ou la seconde unité de communication (40; 114) travaille(nt) selon le standard GSM, GPRS, EDGE et/ou UMTS.

12. Dispositif de transmission (20, 30 ; 112) pour la transmission de données dans un réseau de télécommunication (10, 20, 30, 40 ; 110, 112, 114), en particulier selon un procédé selon l'une quelconque des revendications précédentes, d'une première unité de communication (10 ; 110) à une seconde unité de communication (40 ; 114),
le dispositif de communication (20, 30 ; 112) comprenant un appareil pour l'élaboration d'un message sur l'état de transmission, qui est attribué aux données à transmettre à la seconde unité de communication (40 ; 114), l'appareil pour l'établissement du message sur l'état de transmission prévoyant une information sur une non-délivrabilité des données à transmettre dans le message sur l'état de transmission (M-Delivery.ind) lorsque les données ne peuvent pas être délivrées à la seconde unité de communication (40 ; 114),
**caractérisé en ce que**
pour l'appareil pour l'établissement du message sur l'état de transmission, on a la non-adressabilité des données envoyées lorsque la réception correcte des données envoyées ou d'une notification d'information du destinataire (M-Notification.ind) concernant les données à transmettre à la seconde unité de communication (40; 114) n'est pas confirmée par la seconde unité de communication (40; 114) par un message de confirmation correspondant (M-NotifyResp.ind, M-Acknowledge.ind).

13. Dispositif de transmission selon la revendication 12,
**caractérisé en ce que**
l'appareil pour l'établissement du message sur l'état de transmission prévoit l'information sur la non-délivrabilité des données à transmettre dans le message sur l'état de transmission (M-Delivery.ind) lorsque les données ne peuvent pas être adressées à la secondé unité de communication (40; 114) dans les délais d'une période de validité prédéfinissable.

14. Dispositif de transmission selon la revendication 12 ou 13,
**caractérisé en ce que**
pour l'appareil destiné à l'établissement du message sur l'état de transmission, on a la non-délivrabilité des données envoyées lorsque la réception correcte des données envoyées et d'une notification d'information du destinataire (M-Notification.ind) concernant les données à transmettre à la seconde unité de communication (40 ; 114) n'est pas confirmée par la seconde unité de communication (40; 114) par un message de confirmation correspondant (M-NotifyResp.ind, M-Acknowledge.ind).

15. Dispositif de transmission de communication selon l'une quelconque des revendications 12 à 14,
**caractérisé en ce que**
le dispositif de transmission (20, 30 ; 112) comprend un appareil pour la transmission du message sur l'état de transmission à la première unité de communication (10 ; 110).
